# EUROPEAN PATENT APPLICATION

(11) **EP 2 947 851 A1**
(43) Date of publication of application: **25.11.2015**
(21) Application number: 13871743.4
(22) Date of filing: 18.01.2013
(51) Int. Cl.: H04L 29/08, H04L 29/06

(54) **METHOD FOR PROCESSING LOGICAL CHANNEL IN DEVICE-TO-DEVICE COMMUNICATION, USER EQUIPMENT, AND BASE STATION**

(71) Applicant: Fujitsu Limited, Kawasaki-shi, Kanagawa 211-8588 (JP)
(72) Inventor: XU, Haibo, Beijing 100025 (CN); LU, Yanling, Beijing 100025 (CN); WU, Lianhai, Beijing 100025 (CN); QIU, Tao, Beijing 100025 (CN); CHANG, Ningjuan, Beijing 100025 (CN); WANG, Weiwei, Beijing 100025 (CN)
(74) Representative: Wilding, Frances Ward
(86) International application number: PCT/CN2013/070700
(87) International publication number: WO 2014/110797

(57) **Abstract**

Embodiments of the present disclosure provide a logic channel handling method for D2D (device to device) communication, UE and a base station. The method includes: judging, by the UE, whether a DRB is configured/activated/enabled for D2D communication; performing independent logic channel prioritization and data multiplexing on logic channel(s) to which the DRB configured/activated/enabled for D2D communication corresponds. By the embodiments of the present disclosure, an MAC layer of the UE can handle communication data correctly even if there is DRB for D2D communication.

## Description

### Technical Field

The disclosure relates to the field of communications, and in particular to a logic channel handling method for D2D (device to device) communication, UE (user equipment) and a base station.

### Background

Communication between UE and UE in a current LTE (Long Term Evolution) system needs to be accomplished by a wireless access network and a core network. With the emergence of many new business requirements, and meanwhile in order to be able to reduce load on the network and achieve transfer of network load, communication between UE and UE has gradually become a new research direction. When a distance between two pieces of UE is close enough, the UE can find the presence of each other, allowing direct communication between a device and a device under control of a base station.

Therefore, D2D communication has received wide attention. D2D communication refer to direct communication between UE, and can effectively improve spectrum efficiency of a wireless system and reduce control signaling overhead. Through a discovery mechanism, UE1 and UE2 may report potential UE which can perform D2D communication with them. According to a result of reporting, when a network side learns about that a condition of a channel between the UE1 and the UE2 is suitable for adoption of communication in the manner of D2D, the base station can configure the UE1 and the UE2 to perform direct data transmission without via the core network. A control signaling that supports D2D communication is still sent by an eNB.

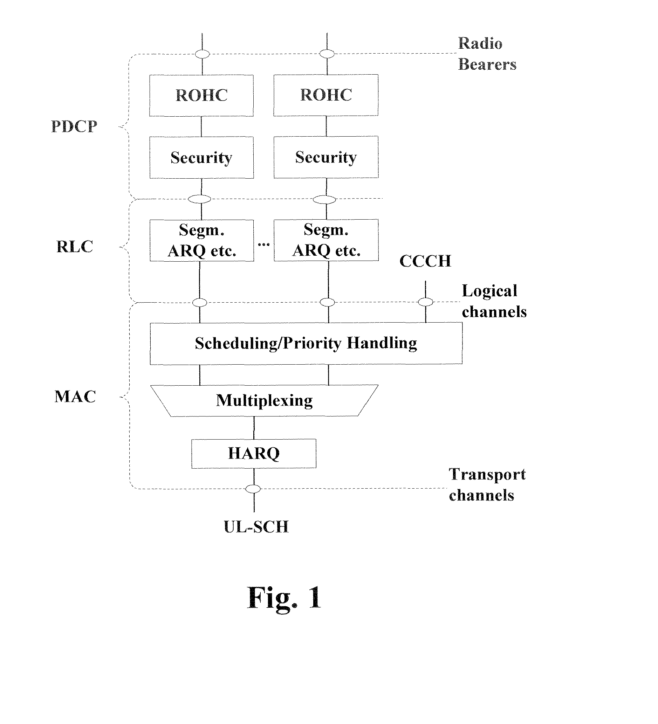

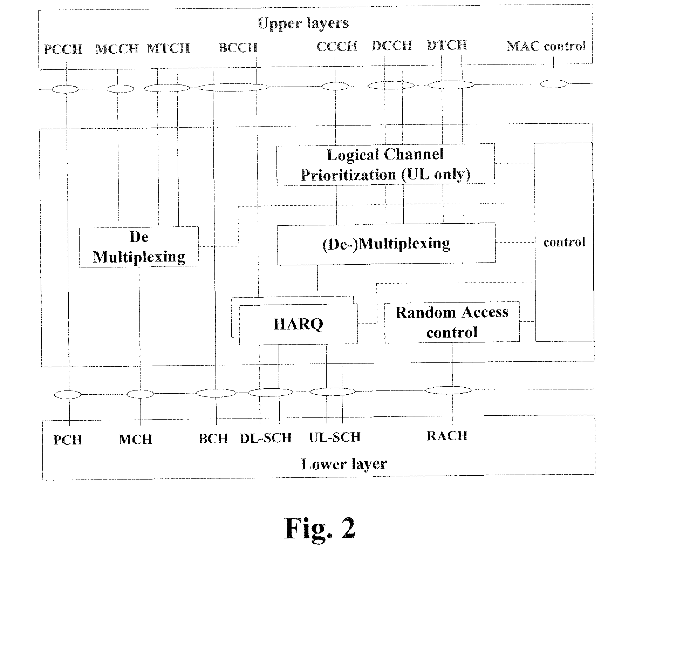

On the other hand, Fig. 1 is an architecture diagram of a data link layer (layer 2) at UE side in the current LTE system. As shown in Fig. 2, the layer 2 includes three layers of protocol stacks including a PDCP (Packet Data Convergence Protocol) layer, an RLC (Radio Link Control) layer and an MAC (Medium Access Control) layer.

Fig. 2 is a detailed architecture diagram of the MAC layer at UE side in the LTE system. As shown in Figs. 1 and 2, at the transmitting end, when an IP packet or a control signaling of the RRC layer forms an RLC PDU (protocol data unit) after being handled by the PDCP layer and the RLC layer. An interface between the RLC layer and the MAC layer is a logic channel. The RLC layer maps the RLC PDU to different logic channels to be transmitted to the MAC layer according to the content transmitted in the RLC PDU. The MAC layer determines the amount of data in each logical channel transmitted in a current subframe according to a processing algorithm of logical channel prioritization defined in the existing reference documents. Hereinafter, the MAC layer multiplexes these data from different logic channels into one MAC PDU and transfers the MAC PDU to a physical layer by a transmission channel.

Similarly, at the receiving end, after the physical layer delivers the received data to the MAC layer by the transmission channel, the MAC layer will perform a demultiplexing processing on the received MAC PDU to obtain one or more MAC SDUs. According to a logic channel number corresponding to the MAC SDU, the MAC layer determines that the decoded MAC SDU is transferred to the RLC layer by which logic channel.

But the inventor finds that in the existing solutions, when the UE has DRB (Data Radio Bearer) with the base station and has DRB of D2D with another UE, there will be a problem if the MAC layer continues to adopt the above processing. This may cause that data which should be transferred to the base station is transferred to other UE, or may cause that data which should be transferred to other UE is transferred to the base station.

Note that the above introduction to the background of the disclosure is stated only for the convenience of clear and complete explanation to the technical solution of the present disclosure, and for the convenience of understanding of persons skilled in the art. It should not be regarded that the above technical solutions are publicly known to persons skilled in the art just because that these solutions are explained in the Background part of the present disclosure.

### Summary

Embodiments of the present disclosure provide a logic channel handling method for D2D communication, UE and a base station. An object of the disclosure is that the MAC layer of the UE can handle communication data correctly even if there is data radio bearer (DRB) for D2D communication.

According to one aspect of the embodiments of the present disclosure, there is provided with a logic channel handling method for D2D communication, the method including:
judging, by UE, whether a DRB is configured/activated/enabled for D2D communication; and
performing independent logic channel prioritization and data multiplexing on logic channel(s) to which the DRB configured/activated/enabled for D2D communication corresponds.

According to another aspect of the embodiments of the present disclosure, there is provided with a logic channel handling method for D2D communication, the method including:
configuring/activating/enabling, by a base station for UE, a DRB for D2D communication, so that the UE performs independent logic channel prioritization and data multiplexing on logic channel(s) to which the DRB configured/activated/enabled for D2D communication corresponds.

According to another aspect of the embodiments of the present disclosure, there is provided with UE, the UE including:
a judging unit, configured to judge whether a DRB is configured/activated/enabled for D2D communication; and
a processing unit, configured to perform independent logic channel prioritization and data multiplexing on logic channel(s) to which the DRB configured/activated/ enabled for D2D communication corresponds.

According to another aspect of the embodiments of the present disclosure, there is provided with a base station, the base station including:
a setting unit, configured to configure/activate/enable a DRB for D2D communication for UE, so that the UE performs independent logic channel prioritization and data multiplexing on logic channel(s) to which the DRB configured/activated/enabled for D2D communication corresponds.

According to another aspect of the embodiments of the present disclosure, there is provided with a communication system which includes the UE as described above and the base station as described above.

According to another aspect of the embodiments of the present disclosure, there is provided with a computer-readable program, wherein when the program is executed in UE, the program enables a computer to carry out the logic channel handling method for D2D communication as described in the above embodiments in the UE.

According to another aspect of the embodiments of the present disclosure, there is provided with a storage medium in which a computer-readable program is stored, wherein the computer-readable program enables a computer to carry out the logic channel handling method for D2D communication as described in the above embodiments in UE.

According to another aspect of the embodiments of the present disclosure, there is provided with a computer-readable program, wherein when the program is executed in a base station, the program enables a computer to carry out the logic channel handling method for D2D communication as described in the above embodiments in the base station.

According to another aspect of the embodiments of the present disclosure, there is provided with a storage medium in which a computer-readable program is stored, wherein the computer-readable program enables a computer to carry out the logic channel handling method for D2D communication as described in the above embodiments in a base station.

The embodiments of the disclosure have beneficial effects that logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

With reference to the aftermentioned description and drawings, specific embodiments of the disclosure are disclosed in detail, which each specifies principles of the disclosure and modes in which the disclosure can be adopted. It should be understood that the embodiments of the disclosure are not limited in the scope. The embodiments of the disclosure can include many variations, modifications and equivalents within the scope of the appended claims and provisions.

Features described and/or shown for one embodiment can be used in other one or more embodiments in the same or a similar manner, can be combined with features in other embodiments, or replace features in other embodiments.

It should be emphasized that the term "comprise/include" means existence of a feature, an assembly, a step or components when used herein, but is not exclusive of existence or addition of one or more other features, assembly, steps or components.

### Brief Description of the Drawings

Many aspects of the disclosure can be better understood with reference to the following drawings. Parts in the drawings are not drawn proportionally, but just for showing the principle of the disclosure. For the convenience of showing and describing some portions of the disclosure, corresponding portions in the drawings may be enlarged or reduced.

Elements and features described in one drawing or one embodiment of the disclosure can be combined with elements and features shown in one or more other drawings or embodiments. In addition, in the drawings, like reference numbers denote corresponding parts in several drawings and can be used for indicating corresponding parts used in more than one embodiment.
Fig. 1 is an architecture diagram of a data link layer at UE side in the current LTE system;
Fig. 2 is a detailed architecture diagram of the MAC layer at UE side in the LTE system;
Fig. 3 is a schematic diagram of logical channel handling and multiplexing process of the MAC layer;
Fig. 4 is a flowchart of a logic channel handling method according to the first embodiment of the present disclosure;
Fig. 5 is a flowchart of a logic channel handling method according to the second embodiment of the present disclosure;
Fig. 6 is another flowchart of a logic channel handling method according to the second embodiment of the present disclosure;
Fig. 7 is a flowchart of a logic channel handling method according to the third embodiment of the present disclosure;
Fig. 8 is another flowchart of a logic channel handling method according to the third embodiment of the present disclosure;
Fig. 9 is a structural schematic of UE according to the fourth embodiment of the present disclosure;
Fig. 10 is another structural schematic of UE according to the fourth embodiment of the present disclosure;
Fig. 11 is another structural schematic of UE according to the fourth embodiment of the present disclosure;
Fig. 12 is another structural schematic of UE according to the fourth embodiment of the present disclosure;
Fig. 13 is a structural schematic of a base station according to the fifth embodiment of the present disclosure;
Fig. 14 is another structural schematic of a base station according to the fifth embodiment of the present disclosure; and
Fig. 15 is a structural schematic of a communication system according to the sixth embodiment of the present disclosure.

### Detailed Description of the Embodiments

The aforementioned and other features of the disclosure will become apparent from the following description with reference to the accompanying drawings. In the description and its accompanying drawings, specific embodiments of the disclosure are disclosed, which specifies part of the embodiments in which principles of the disclosure can be adopted. It should be understood that, the present disclosure is not limited to the described embodiments, but on the contrary, the present disclosure includes all modifications, variations and equivalents that fall within the scope of the appended claims.

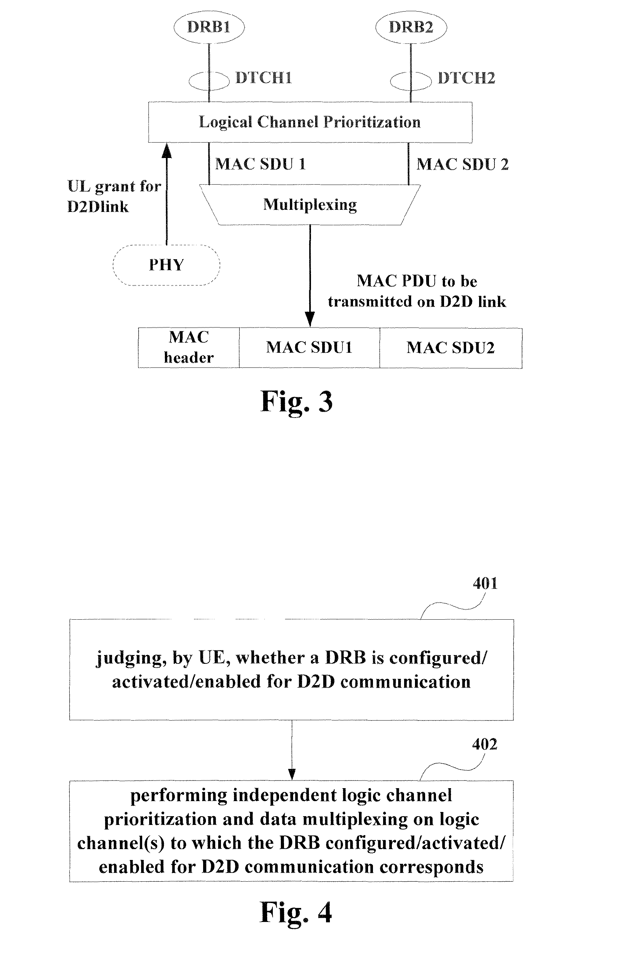

Fig. 3 is a schematic diagram of logical channel handling and multiplexing process of the MAC layer. As shown in Fig. 3, assuming that communication between UE1 and UE2 is carried out by a data radio bearer 1 (DRB1), the DRB1 is mapped to a logic channel DTCH1. Meanwhile, communication between the UE1 and a base station is carried out by a data radio bearer 2 (DRB2), the DRB2 is mapped to a logic channel DTCH2.

As shown in Fig. 3, assuming that at a certain subframe, the UE1 has received a physical resource for communication between the UE1 and the UE2 that is allocated by a base station. The MAC layer of the UE1 may determine size of RLC PDU from the DTCH1 and DTCH2 that can be transmitted, based on size of the data that the physical resource can carry and a processing algorithm of logical channel prioritization. Hereinafter, the RLC PDU from the DTCH1 and DTCH2 may be multiplexed into one MAC PDU to be transferred to the physical layer by a transmission channel. This may cause that the data which should be transferred to the base station is transferred to the UE2. Similarly, at a certain subframe, if the UE1 has received a physical resource for communication between the UE1 and the base station that is allocated by the base station, and if the MAC layer of the UE continue to adopt the processing manner in the current LTE system, this may cause that the data which should be transferred to the UE2 is transferred to the base station. With respect to the above problems, the embodiments of the present disclosure are now described in detail as below.

### The first embodiment

The embodiment of the present disclosure provides a logic channel handling method for D2D communication, applied at the UE side. Fig. 4 is a flowchart of a logic channel handling method according to the embodiment of the present disclosure. As shown in Fig. 4, the method includes:
step 401, judging, by UE, whether a DRB (Data Radio Bearer) is configured/activated/enabled for D2D communication; and
step 402, performing independent logic channel prioritization and data multiplexing on logic channel(s) to which the DRB configured/activated/enabled for D2D communication corresponds.

In this embodiment, the UE can perform logic channel prioritization and data multiplexing, separately on a logic channel to which the DRB configured/activated/enabled for D2D communication corresponds and to a logic channel to which the DRB not configured/activated/enabled for D2D communication corresponds.

In this embodiment, the DRB can be configured, activated or enabled for D2D communication by the base station. The DRB of the UE may correspond to D2D communication, or may correspond to communication between UE and a base station. And the number of the DRB(s) that correspond(s) to D2D communication may be one or multiple.

In this embodiment, the UE can determine the logic channel to which the DRB for D2D communication corresponds in advance. The logic channel to which the DRB for D2D communication corresponds can be determined based on indication information transmitted from the base station after the indication information is received; for example, indication information including "DRB2 is used for carrying D2D data" can be received, and the logic channel corresponding to the DRB2 can be determined based on the indication information to carry the D2D data. Alternatively, the logic channel to which the DRB for D2D communication corresponds can be determined based on indication information that is transmitted from the base station and indicates reserving the logic channel for D2D communication after the indication information is received. Alternatively, the logic channel to which the DRB for D2D communication corresponds can be determined in advance by the system; for example, the system predefines the DRB of D2D corresponding to the logic channels 11 and 12.

However, the present disclosure is not limited to the above, and specific embodiments of the logic channel corresponding to the DRB for D2D communication can be determined based on an actual situation.

In this embodiment, the UE can receive a physical resource for D2D communication that is allocated by the base station. After the UE establishes the DRB for carrying D2D communication, and when the MAC layer of the UE performs logic channel prioritization and data multiplexing, the logic channel corresponding to the DRB between the UE and the base station and the logic channel corresponding to the DRB between the UE can be processed separately. It is practicable to refer to the relevant art regarding how to specifically perform processing on the logic channel.

It can be seen from the above embodiment that, logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

### The second embodiment

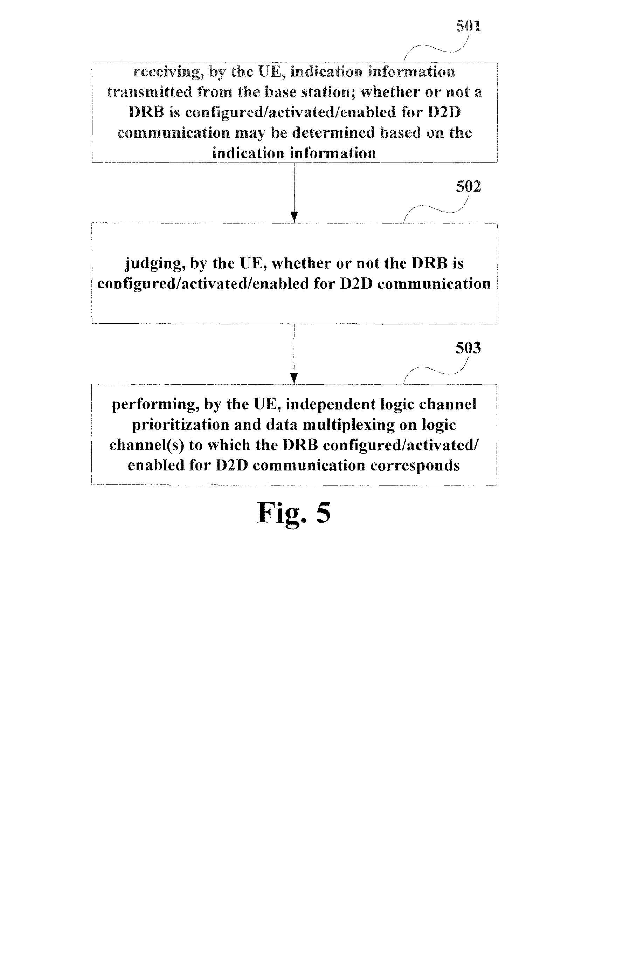

On the basis of the first embodiment, the logic channel handing method will be further described in this embodiment. Fig. 5 is a flowchart of a logic channel handling method according to the embodiment of the present disclosure. As shown in Fig. 5, the method includes:
step 501, receiving, by the UE, indication information transmitted from the base station; whether or not a DRB is configured/activated/enabled for D2D communication may be determined based on the indication information;
step 502, judging, by the UE, whether or not the DRB is configured/activated/enabled for D2D communication; and
step 503, performing, by the UE, independent logic channel prioritization and data multiplexing on logic channel(s) to which the DRB configured/activated/enabled for D2D communication corresponds.

In this embodiment, when the base station decides to modify one DRB between the UE and the base station that has been currently established by the UE into a DRB for D2D, the base station requires the UE to learn about that the DRB has been changed into a DRB for D2D. Alternatively, when the base station decides to establish a new DRB between the UE and another UE, the base station requires the UE to learn about that the newly established DRB is a DRB between the UE and another UE. Thereby, the base station may transmit indication information.

In one embodiment, indication information may be used for identifying whether or not the DRB is configured, or activated, or enabled for D2D communication; or for identifying whether or not the logic channel corresponding to the DRB is configured, or activated, or enabled for D2D communication; or for indicating that one or more (for example, which) DRB(s) is(are) configured for D2D communication.

In specific implementation, the base station may transmit indication information by using a DRB configuration modification process, or a DRB addition process, or a process of switching between a normal LTE communication mode and a D2D communication mode. The UE is notified of that a certain DRB has been configured as a DRB for D2D.

For example, the indication information is identified by parameter(s) in the currently existing information element (IE) LogicChannelConfig; a new parameter may be added in the LogicChannelConfig, for indicating whether or not the logic channel corresponding to a DRB is used for carrying data of D2D communication.

Alternatively, the indication information can be identifyed by parameter(s) in DRB-ToAddMod of a current IE *RadioResourceConfigDedicated.* A new parameter may be added in the DRB-ToAddMod, for indicating whether or not the DRB is used for carrying data of D2D communication.

Alternatively, a new IE may be added in the current message *RRCConnectionRecon figuration*, for indicating which DRB(s) is(are) configured for carrying data of D2D communication. The *RRCConnectionReconfiguration* message may be a message including an IE *mobilityControlInfo,* or may be a message not including the IE *mobilityControlInfo.*

Alternatively, a new IE may be added in the current message *RRCConnectionRecon figuration,* for providing some configuration information required after the LTE communication mode and the D2D communication mode switches to each other, and a parameter in the configuration information is used for indicating which DRB(s) is(are) configured for carrying data of D2D communication.

For example, the *RRCConnectionReconfiguration* message may be a message including an IE *mobilityControlInfo,* or may be a message not including the IE *mobilityControlInfo.*

However, the present disclosure is not limited to the above, it is also possible to add parameter(s) in other IE(s) to perform identification or to use new IEs to perform identification; specific embodiments can be determined based on a specific situation.

To be specific, the step 501 may includes: decoding, by the RRC layer of the UE after the UE has received indication information transmitted from the base station, the indication information; determining whether or not there is a DRB that is configured/activated/ enabled for D2D communication mode; and determining which DRB(s) is(are) configured/ activated/enabled for D2D communication mode. If there is(are) DRB(s) that is(are) configured/activated/enabled for D2D communication mode, then the RRC layer controls logic channel prioritization and data multiplexing processes of the MAC layer by notifying the MAC layer that the logic channel(s) corresponding to the DRB(s) has(have) been configured/activated/enabled for D2D communication mode.

In another embodiment, indication information may include logic channel information (e.g., may be a logic channel identification number) that the base station reserves for the DRB configured/activated/enabled for D2D communication. The base station may reserve a dedicated logic channel for the DRB for carrying data of D2D communication, and notifies this to the UE.

In specific implementation, the reserved logic channel identification number may be an existing logic channel identification number, or may be a logic channel identification number added for D2D communication.

When the base station decides to change the DRB into a DRB of D2D or newly establish a DRB for D2D, the base station may modify or set the logic channel corresponding to the DRB that needs to be modified or newly established as one of the reserved logic channels.

To be specific, the step 501 may include: decoding, by the RRC layer of the UE after the UE has received indication information that is transmitted from the base station, the indication information; determining which logic channel identification number(s) is(are) logic channel identification number(s) specially reserved for D2D communication; and notifying the information to the MAC layer. After the UE has received configuration information of reconfigured or newly established DRB, the MAC layer of a the UE can determine whether or not the DRB has been configured/activated/modified for D2D communication mode based on the logic channel identification number corresponding to the reconfigured or newly established DRB.

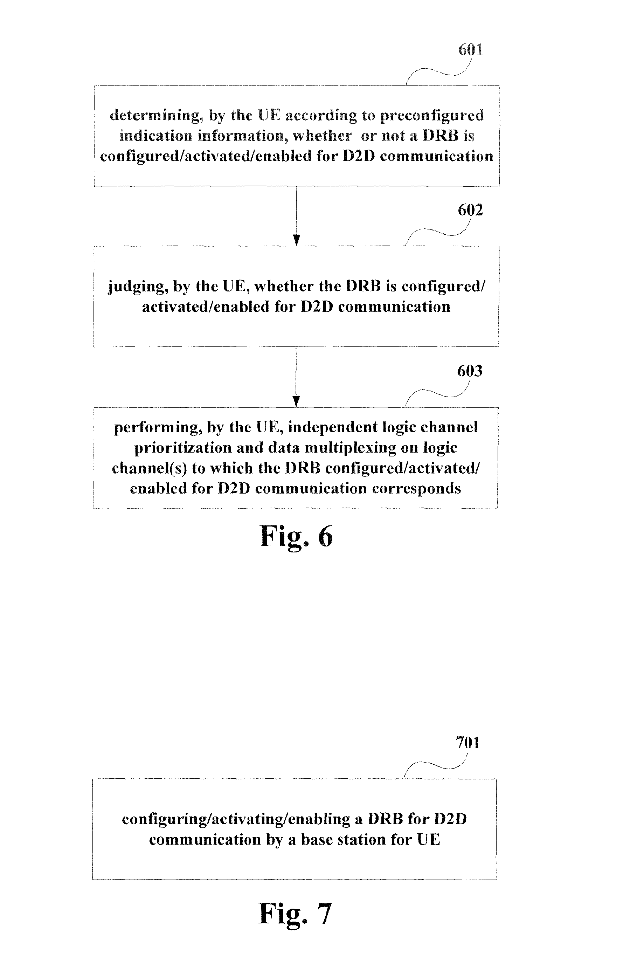

Fig. 6 is another flowchart of a logic channel handling method according to the embodiment of the present disclosure. As shown in Fig. 6, the method includes:
step 601, determining, by the UE according to preconfigured indication information, whether or not a DRB is configured/activated/enabled for D2D communication; the indication information includes: logic channel identification number preconfigured by the system for DRB configured/activated/enabled for D2D communication.
step 602, judging, by the UE, whether the DRB is configured/activated/enabled for D2D communication; and
step 603, performing, by the UE, independent logic channel prioritization and data multiplexing on logic channel(s) to which the DRB configured/activated/enabled for D2D communication corresponds.

In this embodiment, it is possible to define in the LTE system a new logic channel for transmitting data on DRB between UE. When the base station decides to change the DRB into a DRB between UE or newly establish a DRB between UE, the base station may modify or set the logic channel corresponding to the DRB that needs to be modified or newly established as one of the newly defined logic channel identification numbers.

In specific implementation, the preconfigured logic channel identification number may be an existing logic channel identification number, or may be a logic channel identification number added for D2D communication.

Thereby, the UE can learn about the logic channel corresponding to the DRB of D2D communication; the logic channel corresponding to the DRB between the UE and the base station and the logic channel corresponding to the DRB between the UE can be processed separately.

To be specific, the step 601 may include: determining, by the UE according to preconfigured indication information, which logic channel identification number(s) is(are) logic channel identification number(s) specially reserved for D2D communication. After the UE has received configuration information of reconfigured or newly established DRB, the MAC layer of the UE can determine whether or not the DRB has been configured/activated/modified for D2D communication mode based on the logic channel identification number corresponding to the reconfigured or newly established DRB.

The logic channel prioritization and data multiplexing in the step 503 or 603 are described in detail as below.

In one embodiment, the method may further include: establishing a logic channel prioritization and data multiplexing entity for D2D communication; and performing logic channel prioritization and data multiplexing on data of a D2D link by using the logic channel prioritization and data multiplexing entity.

In this embodiment, after the UE has established a DRB for carrying D2D communication, the UE can establish/configure/initiate a new logic channel prioritization and data multiplexing entity. The new logic channel prioritization and data multiplexing entity is used for handling multiplexing between the logic channel corresponding to the DRB of D2D and the data thereof. Current algorithms can be adopted for a processing algorithm of logical channel prioritization and thus are not repeated herein.

While the previously described logic channel prioritization and data multiplexing entity can be used for handling multiplexing between the logic channel corresponding to the DRB between the UE and the base station and the data thereof. Thereby, different logic channel prioritization and data multiplexing entities can be used to process data on a D2D link and data on a cellular link separately.

In another embodiment, one logic channel prioritization and data multiplexing entity is stilled adopted; wherein, logic channel prioritization and data multiplexing to the data on the D2D link can specifically include: determining size of amount of data transmitted on the logic channel corresponding to the DRB for D2D communication; multiplexing the data into the MAC PDU corresponding to the D2D communication.

Specifically, at a certain subframe, when the UE has received a physical resource for D2D communication that is allocated by the base station, the UE can determine the size of amount of data that can be transmitted on the logic channel corresponding to the DRB of D2D based on the current processing algorithm of logical channel prioritization, and then multiplex the data into one MAC PDU corresponding to D2D.

In another embodiment, one logic channel prioritization and data multiplexing entity is stilled adopted; wherein, the method further includes: receiving a physical resource for communication between the UE and the base station that is allocated by the base station; and determining the size of amount of data transmitted on the logic channel corresponding to a DRB and a signaling radio bearer between the UE and the base station, and multiplexing the data into an MAC PDU corresponding to communication between the UE and the base station.

Specifically, at a certain subframe, when the UE has only received a physical resource for D2D communication that is allocated by the base station, the UE determines the size of amount of data that can be transmitted on the logic channel corresponding to the DRB of D2D based on the current processing algorithm of logical channel prioritization, and then multiplexes the data into one MAC PDU.

At a certain subframe, when the UE has only received a physical resource for communication between the UE and the base station that is allocated by the base station, the UE determines the size of amount of data that can be transmitted on the logic channel corresponding to the DRB between the UE and the base station based on the current processing algorithm of logical channel prioritization, and then multiplexes the data into one MAC PDU.

At a certain subframe, when the UE has received both of a physical resource for communication between the UE and the base station and a physical resource for D2D communication that are allocated by the base station, the UE determines the size of amount of data that can be transmitted on the logic channel corresponding to the DRB between the UE and the base station and the size of amount of data that can be transmitted on the logic channel corresponding to the DRB of D2D, respectively based on the current processing algorithm of logical channel prioritization, and then multiplexes the data into two MAC PDUs respectively.

In this embodiment, the number of DRB for D2D communication may be one or more. When there are multiple DRBs for D2D communication, the indication information in the step 601 or the step 501 may further include index information of a D2D link corresponding to the DRB. And in the step 503 or 603, data can be multiplexed into two or more MAC PDUs respectively.

It can be seen from the above embodiment that, logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

### The third embodiment

The embodiment of the present disclosure provides a logic channel handling method for D2D communication, applied at the side of a base station. Contents that are the same as the first and second embodiments will not be repeated herein.

Fig. 7 is a flowchart of a logic channel handling method according to the embodiment of the present disclosure. As shown in Fig. 7, the method includes:
step 701, configuring/activating/enabling a DRB for D2D communication by a base station for UE, so that the UE performs independent logic channel prioritization and data multiplexing on logic channel(s) to which the DRB configured/activated/enabled for D2D communication corresponds.

In specific implementation, the method may further include: determining, by the base station, whether or not to change a DRB into a DRB for D2D communication or to add a DRB for D2D communication. And, when it is determined to change the DRB into a DRB for D2D communication and to add a DRB for D2D communication, the base station configures/activates/ enables the DRB for D2D communication for the UE.

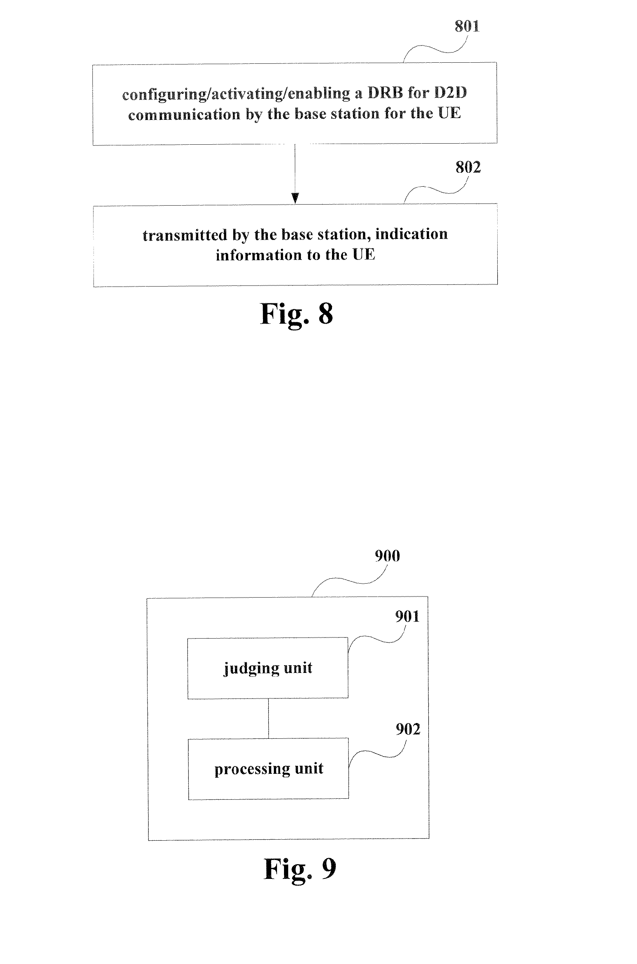

Fig. 8 is a flowchart of a logic channel handling method according to the embodiment of the present disclosure. As shown in Fig. 8, the method includes:
step 801, configuring/activating/enabling a DRB for D2D communication by the base station for the UE;
step 802, transmitted by the base station, indication information to the UE.

In one embodiment, the indication information is used for identifying whether or not the DRB is configured/activated/enabled for D2D communication, or for identifying whether or not the logic channel corresponding to the DRB is configured/activated/enabled for D2D communication, or for indicating that which DRB(s) is(are) configured/activated/ enabled for D2D communication.

In specific implementation, the base station can transmit indication information by using a DRB configuration modification process, or a DRB addition process, or a process of switching between a normal LTE communication mode and a D2D communication mode. The UE is notified of that a certain DRB has been configured as a DRB for D2D.

Specifically, the indication information can be identified by adding a new parameter in an IE LogicalChannelConfig, or can be identified by adding a new parameter in an IE *RadioResourceConfig Dedicated,* or can be identified by adding a new IE in the current message *RRCConnectionReconfiguration,* or can be identified by one of parameters of some configuration information required after the LTE communication mode and the D2D communication mode switches to each other that is provided by adding a new IE in the current message *RRCConnectionReconfiguration.* However, the present disclosure is not limited to the above, and specific embodiments can be determined based on an actual situation.

In specific implementation, the base station can transmit indication information by using a DRB configuration modification process, or a DRB addition process, or a process of switching between a normal LTE communication mode and a D2D communication mode.

In another embodiment, the indication information may include logic channel identification number reserved by the base station for DRB configured/activated/enabled for D2D communication. The method may further include configuring the logic channel corresponding to the changed or added DRB for D2D communication as one of the reserved logic channels.

In another embodiment, the indication information may also be transmitted not by the base station, but may be predefined by the system. The step 701 of configuring/activating/ enabling DRB for D2D communication by a base station for UE may specifcally include: configuring the logic channel identification number to which the DRB configured/ activated/enabled for D2D communication corresponds as one of logic channel identification numbers predefined by the system.

In this embodiment, the number of DRB configured/activated/enabled for D2D communication may be one or more. The indication information in the step 802 may further include an index of a D2D communication link corresponding to the DRB.

It can be seen from the above embodiment that, logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

### The fourth embodiment

The embodiment of the present disclosure provides user equipment (UE) which corresponds to the method at the side of the UE in the first or second embodiment, and the same contents will not be repeated herein.

Fig. 9 is a structural schematic of UE according to the fourth embodiment of the present disclosure. As shown in Fig. 9, the UE 900 includes a judging unit 901 and a processing unit 902. It is practicable to refer to the relevant art regarding other parts of the UE 900.

In this embodiment, the judging unit 901 is configured to judge whether or not a DRB is configured/activated/enabled for D2D communication; the processing unit 902 is configured to perform independent logic channel prioritization and data multiplexing on logic channel(s) to which the DRB configured/activated/enabled for D2D communication corresponds.

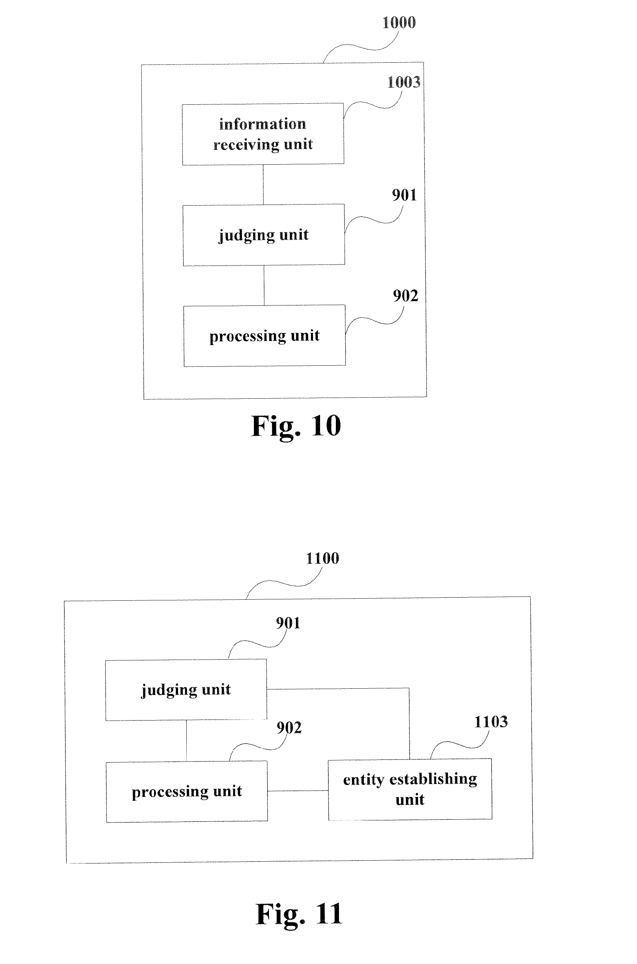

Fig. 10 is another structural schematic of UE according to the fourth embodiment of the present disclosure. As shown in Fig. 10, the UE 1000 includes the judging unit 901 and the processing unit 902 as described above.

As shown in Fig. 10, the UE 1000 may further include an information receiving unit 1003; wherein, the information receiving unit 1003 is configured to receive indication information transmitted by the base station.

In one embodiment, the indication information is used for identifying whether or not the DRB is configured/activated/enabled for D2D communication, or for identifying whether or not the logic channel corresponding to the DRB is configured/activated/enabled for D2D communication, or for indicating that which DRB(s) is(are) configured/activated/ enabled for D2D communication.

In another embodiment, the indication information includes logic channel information reserved by the base station for the DRB configured/activated/enabled for D2D communication.

In this embodiment, the UE may also obtain preconfigured indication information which includes logic channel information reserved by the system for the DRB configured/avtivated/enabled for D2D communication.

Fig. 11 is another structural schematic of UE according to the fourth embodiment of the present disclosure. As shown in Fig. 11, the UE 1100 includes the judging unit 901 and the processing unit 902 as described above.

As shown in Fig. 11, in one embodiment, the UE 1100 may further include an entity establishing unit 1103, which is configured to establish a logic channel prioritization and data multiplexing entity for D2D communication;
and the proessing unit 902 is configured to use the logic channel prioritization and data multiplexing entity for D2D communication to perform logic channel prioritization and data multiplexing on the data for D2D communication.

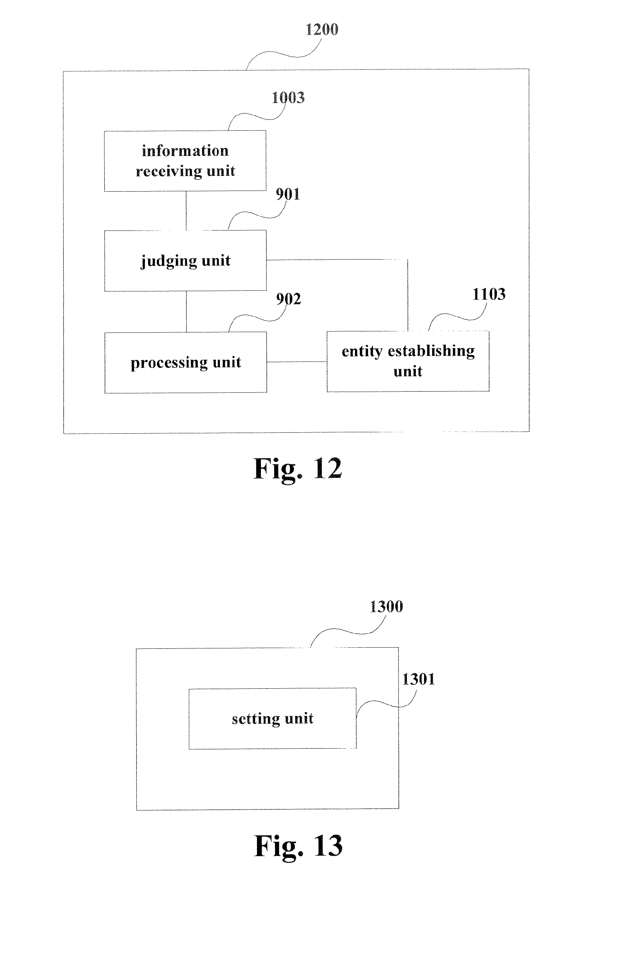

Fig. 12 is another structural schematic of user equipment (UE) according to the embodiment of the present disclosure. As shown in Fig. 12, the UE 1200 includes the judging unit 901, the processing unit 902 and the information receiving unit 1003 as described above. As shown in Fig. 12, in one embodiment, the UE 1200 may further include an entity establishing unit 1103.

In another embodiment, the processing unit 902 is specifically configured to determine size of amount of data transmitted on the logic channel corresponding to the DRB for D2D communication, and multiplex the data into the MAC PDU corresponding to the D2D communication.

In another embodiment, the processing unit 902 is specifically configured to determine the size of amount of data transmitted on the logic channels corresponding to a DRB and a signaling radio bearer between the UE and the base station, and multiplex the data into an MAC PDU corresponding to communication between the UE and the base station.

In addition, the processing unit 902 is further configured to determine size of amount of data transmitted on the logic channel corresponding to the DRB for D2D communication, and multiplex the data into the MAC PDU corresponding to the D2D communication.

In this embodiment, the number of DRB configured/activated/enabled for D2D communication may be one or more. The indication information received in the information receiving unit 1003 may further include an index of a D2D communication link corresponding to the DRB. In addition, the processing unit 902 is further configured to multiplex data into two or more MAC PDUs.

It can be seen from the above embodiment that, logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

### The fifth embodiment

The embodiment of the present disclosure provides a base station which corresponds to the method at the side of the base station in the third embodiment, and the same contents will not be repeated herein.

Fig. 13 is a structural schematic of a base station according to the embodiment of the present disclosure. As shown in Fig. 13, the base station 1300 includes a setting unit 1301. It is practicable to refer to the relevant art regarding other parts of the base station 1300.

In this embodiment, the setting unit 1301 is configured to configure/activate/enable a DRB for D2D communication for UE, so that the UE performs independent logic channel prioritization and data multiplexing on logic channel(s) to which the DRB configured/ activated/enabled for D2D communication corresponds.

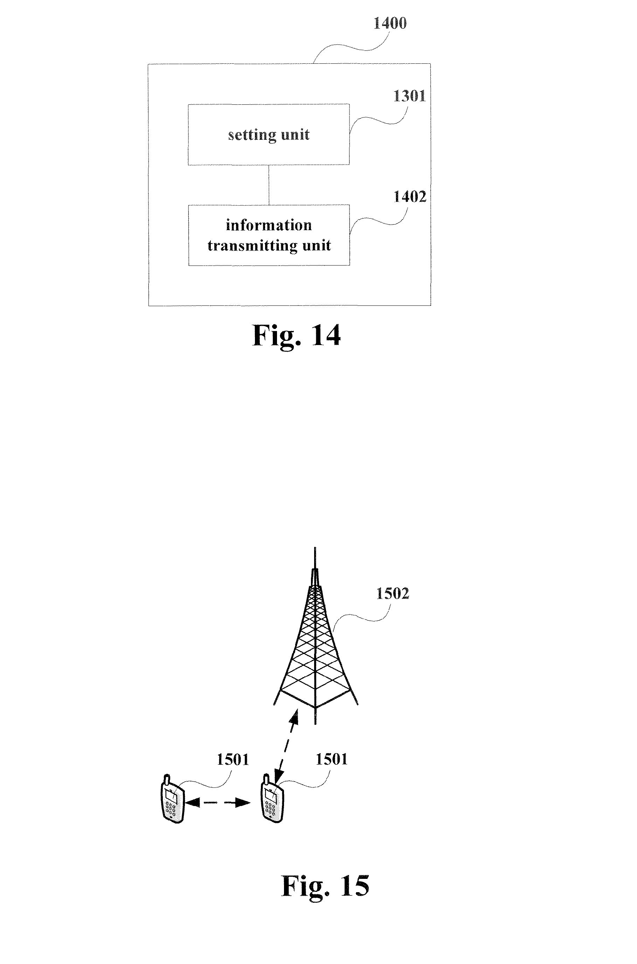

Fig. 14 is another structural schematic of a base station according to the embodiment of the present disclosure. As shown in Fig. 14, the base station 1400 includes the setting unit 1301 as described above.

As shown in Fig. 14, the base station 1400 may further include an information transmitting unit 1402, which is configured to transmit indication information to the UE.

In one embodiment, indication information is used for identifying whether or not the DRB is configured/activated/enabled for D2D communication, or for identifying whether or not the logic channel corresponding to the DRB is configured/activated/enabled for D2D communication, or for indicating that which DRB(s) is(are) configured/activated/enabled for D2D communication.

In addition, the information transmitting unit 1402 is further configured to transmit the indication information by using a DRB configuration modification process, or a DRB addition process, or a process of switching between a normal LTE communication mode and a D2D communication mode.

In another embodiment, indication information may include logic channel information reserved by the base station for the DRB configured/activated/enabled for D2D communication. In addition, the setting unit 1301 is specifically configured to configure the logic channel identification number to which the DRB configured/activated/enabled for D2D communication corresponds as one of the reserved logic channel identification numbers.

In another embodiment, the setting unit 1301 is specifically configured to configure the logic channel identification number to which the DRB configured/activated/enabled for D2D communication corresponds as one of logic channel identification numbers predefined by the system.

In this embodiment, the number of DRB configured/activated/enabled for D2D communication may be one or more. The indication information in the information transmitting unit 1402 may further include an index of a D2D communication link corresponding to the DRB.

It can be seen from the above embodiment that, logic channel prioritization and data multiplexing are performed on data of a D2D link based on the logic channel corresponding to the DRB for D2D communication, thus the MAC layer of the UE can handle communication data correctly even if there is data radio bearer (DRB) for D2D communication.

### The sixth embodiment

The embodiment of the present disclosure further provides a communication system which includes the UE as described in the fourth embodiment and the base station as described in the fifth embodiment.

Fig. 15 is a structural schematic of a communication system according to the sixth embodiment of the present disclosure. As shown in Fig. 15, the communication system 1500 includes user equipment (UE) 1501 and a base station 1502.

In this embodiment, the UE 1501 may include a judging unit and a processing unit. The judging unit is configured to judge whether or not the DRB is configured/activated/ enabled for D2D communication; the processing unit is configured to perform independent logic channel prioritization and data multiplexing on logic channel(s) to which the DRB configured/activated/enabled for D2D communication corresponds.

The base station 1502 may include a setting unit. The setting unit is configured to configure/activate/enable a DRB for D2D communication for the UE 1501, so that the UE 1501 performs independent logic channel prioritization and data multiplexing on logic channel(s) to which the DRB configured/activated/enabled for D2D communication corresponds.

It is practicable to refer to the first through fifth embodiments regarding other contents of the communication system 1500. It is worth noting that, Fig. 15 only schematically shows the structure of the communication system. However, the present disclosure is not limited to this, and specific embodiments can be determined based on an actual situation.

The embodiment of the present disclosure further provides a computer-readable program, wherein when the program is executed in UE, the program enables a computer to carry out the logic channel handling method for D2D communication as described in the above first or second embodiment in the UE.

The embodiment of the present disclosure further provides a storage medium in which a computer-readable program is stored, wherein the computer-readable program enables a computer to carry out the logic channel handling method for D2D communication as described in the above first or second embodiment in UE.

The embodiment of the present disclosure further provides a computer-readable program, wherein when the program is executed in a base station, the program enables a computer to carry out the logic channel handling method for D2D communication as described in the above third embodiment in the base station.

The embodiment of the present disclosure further provides a storage medium in which a computer-readable program is stored, wherein the computer-readable program enables a computer to carry out the logic channel handling method for D2D communication as described in the above third embodiment in a base station.

The above devices and methods of the disclosure can be implemented by hardware, or by combination of hardware with software. The disclosure relates to such a computer readable program that when the program is executed by a logic component, it is possible for the logic component to implement the preceding devices or constitute components, or to realize the preceding various methods or steps. The disclosure further relates to a storage medium for storing the above programs, such as a hard disk, a magnetic disk, an optical disk, a DVD, a flash memory and the like.

For one or more of functional blocks and/or combination of one or more functional blocks described in the accompanying drawings, it can be implemented as a general purpose processor, a digital signal processor (DSP), an application specific integrated circuit (ASIC), a field programmable gate array (FPGA) or other programmable logic devices, a discrete gate or transistor logic device, a discrete hardware component or any suitable combination thereof for executing the functions described in the present application. For one or more of functional blocks and/or combination of one or more functional blocks described in the accompanying drawings, it also can be implemented as combination of computation devices, such as combination of a DSP and a microprocessor, a plurality of microprocessors, one or more microprocessors in communication combination with the DSP or any other such configuration.

Hereinbefore the disclosure is described by combining specific embodiments, but those skilled in the art should understand, these descriptions are exemplary and are not limitation to the protection scope of the disclosure. Those skilled in the art can make various variations and modifications to the disclosure according to principle of the disclosure, and these variations and modifications shall fall within the scope of the disclosure.

## Claims

1. A logic channel handling method for device to device (D2D) communication, comprising:
judging, by UE, whether a DRB (Data Radio Bearer) is configured/activated/enabled for D2D communication; and
performing independent logic channel prioritization and data multiplexing on logic channel(s) to which the DRB configured/activated/enabled for D2D communication corresponds.

2. The method according to claim 1, wherein the method further comprises:
receiving, by the UE, indication information transmitted by a base station, the indication information being used to identify whether a DRB is configured/activated/ enabled for D2D communication, or being used to identify whether the logic channel to which the DRB corresponds is configured/activated/enabled for D2D communication, or being used to indicate one or more DRB(s) is(are) configured for D2D communication.

3. The method according to claim 2, wherein the indication information is identified by parameter(s) in an information element LogicalChannelConfig,
or the indication information is identified by parameter(s) in DRB-ToAddMod of an information element *RadioResourceConfigDelicated*;
or the indication information is identified by information element(s) in a message *RRCConnectionReconfiguration*;
or configuration information needed in D2D communication is configured by information element(s) in the message *RRCConnectionReconfiguration,* and the indication information is identified by configuration information parameter(s) therein.

4. The method according to claim 1, wherein the method further comprises:
receiving, by the UE, indication information transmitted by the base station, so as to determine whether the DRB is configured/activated/enabled for D2D communication; the indication information comprising: logic channel identification number reserved by the base station for DRB configured/activated/enabled for D2D communication.

5. The method according to claim 4, wherein the reserved logic channel identification number is an existing logic channel identification number, or a logic channel identification number added for D2D communication.

6. The method according to claim 1, wherein the method further comprises:
determining, by the UE according to preconfigured indication information, whether the DRB is configured/activated/enabled for D2D communication; the indication information comprising: logic channel identification number preconfigured by the system for the DRB configured/activated/enabled for D2D communication.

7. The method according to claim 6, wherein the preconfigured logic channel identification number is an existing logic channel identification number, or a logic channel identification number added for D2D communication.

8. The method according to claim 1, wherein the method further comprises:
establishing/configuring/initiating, by the UE, a logic channel prioritization and data multiplexing entity for D2D communication;
and the logic channel prioritization and data multiplexing entity is used to perform logic channel prioritization and data multiplexing on logic channel(s) to which the DRB configured/activated/enabled for D2D communication corresponds.

9. The method according to claim 1, wherein the performing logic channel prioritization and data multiplexing on logic channel(s) to which the DRB configured/ activated/enabled for D2D communication corresponds comprises:
determining an amount of data transmitted on the logic channel to which the DRB configured/activated/enabled for D2D communication corresponds; and
multiplexing the data into a medium access control (MAC) protocol data unit (PDU) to which the D2D communication corresponds.

10. The method according to claim 1, wherein the method further comprises:
determining an amount of data transmitted on the logic channel to which the DRB not configured/activated/enabled for D2D communication and a signaling radio bearer correspond, and multiplexing the data into a MAC PDU to which a device to base station communication corresponds; and
determining an amount of data transmitted on the logic channel to which the DRB configured/activated/enabled for D2D communication corresponds, and multiplexing the data into a MAC PDU to which the D2D communication corresponds.

11. The method according to claim 1, wherein the number of the DRB(s) configured/activated/enabled for D2D communication is one or more.

12. The method according to claim 2 or 4, wherein the indication information further comprises: an index of a D2D communication link to which the DRB corresponds.

13. A logic channel handling method for D2D communication, comprising:
configuring/activating/enabling, by a base station for UE, a DRB for D2D communication, so that the UE performs independent logic channel prioritization and data multiplexing on logic channel(s) to which the DRB configured/activated/enabled for D2D communication corresponds.

14. The method according to claim 13, wherein the configuring/activating/enabling, by a base station for UE, a DRB for D2D communication comprises:
transmitting indication information by the base station to the UE, the indication information being used to identify whether DRB is configured/activated/enabled for D2D communication, or being used to identify whether the logic channel to which the DRB corresponds is configured/activated/enabled for D2D communication, or being used to indicate one or more DRB(s) is(are) configured for D2D communication.

15. The method according to claim 14, wherein the indication information is transmitted in a DRB configuration modification procedure, or a DRB addition procedure, or a handover procedure between a device to base station communication and a D2D communication.

16. The method according to claim 14, wherein the indication information is identified by parameter(s) in an information element LogicalChannelConfig,
or the indication information is identified by parameter(s) in DRB-ToAddMod of an information element *RadioResourceConfigDelicated*;
or the indication information is identified by information element(s) in a message *RRCConnectionReconfiguration*;
or configuration information needed in D2D communication is configured by information element(s) in the message RRCConnectionReconfiguration, and the indication information is identified by configuration information parameter(s) therein.

17. The method according to claim 13, wherein the configuring/activating/enabling, by a base station for UE, a DRB for D2D communication comprises:
transmitting indication information by the base station to the UE, the indication information comprising: logic channel identification number(s) reserved by the base station for DRB configured/activated/enabled for D2D communication.

18. The method according to claim 17, wherein the method further comprises:
configuring the logic channel identification number to which the DRB configured/activated/enabled for D2D communication corresponds as one of the reserved logic channel identification numbers.

19. The method according to claim 13, wherein the configuring/activating/enabling, by a base station for UE, a DRB for D2D communication comprises:
configuring the logic channel identification number to which the DRB configured/ activated/enabled for D2D communication corresponds as one of logic channel identification numbers predefined by the system.

20. The method according to claim 13, wherein the number of the DRB(s) configured/activated/enabled for D2D communication is one or more.

21. The method according to claim 14 or 17, wherein the indication information further comprises: an index of a D2D communication link to which the DRB corresponds.

22. UE, comprising:
a judging unit, configured to judge whether a DRB is configured/activated/enabled for D2D communication; and
a processing unit, configured to perform independent logic channel prioritization and data multiplexing on logic channel(s) to which the DRB configured/activated/ enabled for D2D communication corresponds.

23. The UE according to claim 22, wherein the UE further comprises:
an information receiving unit, configured to receive indication information transmitted by a base station, the indication information being used to identify whether a DRB is configured/activated/enabled for D2D communication, or being used to identify whether the logic channel to which the DRB corresponds is configured/activated/enabled for D2D communication, or being used to indicate one or more DRB(s) is(are) configured for D2D communication.

24. The UE according to claim 22, wherein the UE further comprises:
an information receiving unit, configured to receive indication information transmitted by a base station, so as to determine whether a DRB is configured/activated/ enabled for D2D communication; the indication information comprising: logic channel identification number reserved by the base station for the DRB configured/activated/enabled for D2D communication.

25. The UE according to claim 22, wherein the UE determines whether the DRB is configured/activated/enabled for D2D communication, according to preconfigured indication information; the indication information comprising: logic channel identification number preconfigured by the system for a DRB configured/activated/ enabled for D2D communication.

26. The UE according to claim 22, wherein the UE further comprises:
an entity establishing unit, configured to establish/configure/initiate a logic channel prioritization and data multiplexing entity for D2D communication;
and the processing unit is configured to use the logic channel prioritization and data multiplexing entity to perform logic channel prioritization and data multiplexing on logic channel(s) to which the DRB configured/activated/enabled for D2D communication corresponds.

27. The UE according to claim 22, wherein the processing unit is configured to:
determine an amount of data transmitted on the logic channel to which the DRB configured/activated/enabled for D2D communication corresponds, and multiplex the data into a medium access control protocol data unit to which the D2D communication corresponds.

28. The UE according to claim 22, wherein the processing unit is configured to:
determine an amount of data transmitted on the logic channel to which the DRB not configured/activated/enabled for D2D communication and a signaling radio bearer correspond, and multiplex the data into a medium access control protocol data unit to which a device to base station communication corresponds; and
determine an amount of data transmitted on the logic channel to which the DRB configured/activated/enabled for D2D communication corresponds, and multiplex the data into a medium access control protocol data unit to which the D2D communication corresponds.

29. The UE according to claim 22, wherein the number of the DRB(s) configured/ activated/enabled for D2D communication is one or more.

30. The UE according to claim 23 or 24, wherein the indication information further comprises: an index of a D2D communication link to which the DRB corresponds.

31. A base station, comprising:
a setting unit, configured to configure/activate/enable a DRB for D2D communication for UE, so that the UE performs independent logic channel prioritization and data multiplexing on logic channel(s) to which the DRB configured/activated/enabled for D2D communication corresponds.

32. The base station according to claim 31, wherein the base station further comprises:
an information transmitting unit, configured to transmit indication information to the UE, the indication information being used to identify whether the DRB is configured/ activated/enabled for D2D communication, or being used to identify whether the logic channel to which the DRB corresponds is configured/activated/enabled for D2D communication, or being used to indicate one or more DRB(s) is(are) configured as D2D communication.

33. The base station according to claim 31, wherein the base station further comprises:
an information transmitting unit, configured to transmit indication information to the UE; the indication information comprising: logic channel identification number(s) reserved by the base station for DRB configured/activated/enabled for D2D communication.

34. The base station according to claim 33, wherein the setting unit is configured to:
configure the logic channel identification number to which the DRB configured/ activated/enabled for D2D communication corresponds as one of the reserved logic channel identification numbers.

35. The base station according to claim 31, wherein the setting unit is configured to:
configure the logic channel identification number to which the DRB configured/ activated/enabled for D2D communication corresponds as one of logic channel identification numbers predefined by the system.

36. The base station according to claim 31, wherein the number of the DRB(s) configured/activated/enabled for D2D communication is one or more.

37. The base station according to claim 32 or 33, wherein the indication information further comprises: an index of a D2D communication link to which the DRB corresponds.

38. A communication system, comprising the UE as claimed in any one of claims 22-30 and the base station as claimed in any one of claims 31-37.

39. A computer-readable program, wherein when the program is executed in UE, the program enables a computer to carry out the logic channel handling method for D2D communication as claimed in any one of claims 1-12 in the UE.

40. A storage medium in which a computer-readable program is stored, wherein the computer-readable program enables a computer to carry out the logic channel handling method for D2D communication as claimed in any one of claims 1-12 in UE.

41. A computer-readable program, wherein when the program is executed in an base station, the program enables a computer to carry out the logic channel handling method for D2D communication as claimed in any one of claims 13-21 in the base station.

42. A storage medium in which a computer-readable program is stored, wherein the computer-readable program enables a computer to carry out the logic channel handling method for D2D communication as claimed in any one of claims 13-21 in an base station.
